# EUROPÄISCHE PATENTSCHRIFT

(11) **EP 2 921 924 B1**
(45) Veröffentlichungstag und Bekanntmachung des Hinweises auf die Patenterteilung: **19.09.2018**
(21) Anmeldenummer: 14161000.6
(22) Anmeldetag: 21.03.2014
(51) Int. Cl.: G05D 16/20, G05D 16/06

(54) **Vorrichtung zur Bereitstellung eines Fluids mit geregeltem Ausgangsdruck**
Device for providing a fluid with controlled output pressure
Dispositif permettant de fournir un fluide avec régulation de la pression de sortie

(43) Veröffentlichungstag der Anmeldung: 23.09.2015
(73) Patentinhaber: Asco Numatics GmbH, 75248 Ölbronn-Dürrn (DE)
(72) Erfinder: Vogt, Martin, 73230 Kirchheim/Teck (DE); Steinle, Harald, 75443 Ötisheim (DE); Ams, Felix, 75236 Kämpfelbach (DE)
(74) Vertreter: Witte, Weller & Partner Patentanwälte mbB

(56) Entgegenhaltungen:
- FR-A1- 2 391 408
- GB-A- 885 445
- US-A- 3 252 471
- US-A- 4 776 368
- US-A- 5 595 209

## Beschreibung

Die vorliegende Erfindung betrifft eine Vorrichtung zur Bereitstellung eines Fluids mit geregeltem Ausgangsdruck, die eine über einen Vorsteuerdruck gesteuerte Druckregeleinheit aufweist, an der ein Eintrittsraum für das unter einem Eingangsdruck stehende Fluid, ein Austrittsraum für das den geregelten Ausgangsdruck aufweisende Fluid, sowie eine erste, zwischen dem Eintrittsraum und dem Austrittsraum wirkende Ventileinheit vorgesehen sind, und die eine Vorsteuereinheit umfasst, die den Vorsteuerdruck bereitstellt, wobei die Druckregeleinheit eine erste Membran, auf die der Vorsteuerdruck einwirkt, und eine mechanisch mit der ersten Membran gekoppelte zweite Membran aufweist, auf die das den Ausgangsdruck aufweisende Fluid einwirkt, wobei zumindest die zweite Membran mechanisch auf die erste Ventileinheit einwirkt.

Derartige Vorrichtungen sind der Anmelderin bekannt.

Grundsätzlich ähnliche Vorrichtungen mit einer ersten Membran und einer zweiten Membran sind aus der US 3,252,471 A, der DE 28 18 633 A1, und der US 4,776,368 A bekannt.

insbesondere für den Einsatz in Testvorrichtungen und in Sondermaschinen werden hochgenaue Druckregler mit einer Genauigkeit von besser als 1 %, häufig besser als 0,5 % benötigt, was von den bekannten Vorrichtungen nicht oder nicht bei hinreichend niedrigem Energieverbrauch geleistet werden kann.

Hinzu kommt, dass bei den bekannten Vorrichtungen die Regelung mit einer merklichen Reibkraft einhergeht, so dass sie eine Regelungshysterese aufweist. Ferner sind die bekannten Vorrichtungen anfällig gegenüber schwankendem Eingangsdruck.

Häufig werden auch die Schaltgeräusche bekannter Vorrichtungen als nachteilig empfunden.

Bei bekannten Vorrichtungen ist es ferner von Nachteil, dass der Ausgangsdruck häufig merklich unterhalb des Eingangsdruckes bleiben muss, was energetisch ebenfalls von Nachteil ist.

Vor diesem Hintergrund liegt der vorliegenden Erfindung die Aufgabe zugrunde, eine Vorrichtung der eingangs genannten Art dahingehend weiterzubilden, dass zumindest einige der vorstehend genannten Nachteile auf konstruktiv einfache Weise vermieden werden. Vorzugsweise soll die neue Vorrichtung eine präzise mechanische Druckregelung ermöglichen.

Erfindungsgemäß wird diese Aufgabe bei der eingangs genannten Vorrichtung dadurch gelöst, dass in dem Eintrittsraum zumindest ein Ausgleichselement mit druckabhängiger Kompensationskraft angeordnet ist.

Die der Erfindung zugrunde liegende Aufgabe wird auf diese Weise vollkommen gelöst.

Weil die Druckregeleinheit eine Doppelmembran-Anordnung aus erster und zweiter Membran aufweist, ist eine präzise mechanische Druckregelung möglich, denn der Ausgangsdruck kann bis auf wenige mbar an den Eingangsdruck herangeführt werden.

Darüber hinaus lässt sich der Vorsteuerdruck nahezu 1:1 in den Ausgangsdruck umsetzen, wobei die Regelung mit minimaler Reibkraft erfolgt und deshalb sehr hysteresearm ist.

Dabei ist es bevorzugt, wenn die erste und die zweite Membran jeweils eine wirksame Druckfläche aufweisen, wobei die Druckfläche der ersten Membran zumindest genauso groß ist wie die wirksame Druckfläche der zweiten Membran.

Diese Maßnahme sorgt insbesondere für die erwähnte präzise mechanische Druckregelung.

Erfindungsgemäß ist in dem Eintrittsraum zumindest ein Ausgleichselement mit druckabhängiger Kompensationskraft angeordnet.

Bei dieser Maßnahme ist von Vorteil, dass der Ausgangsdruck weitgehend unabhängig vom Eingangsdruck geregelt werden kann, so dass nicht nur Schwankungen im Eingangsdruck selbst sondern auch solche Druckschwankungen im Eintrittsraum kompensiert werden, die sich durch das unterschiedliche Öffnen oder Schließen der ersten Ventileinheit, also die Regelung des Ausgangsdrucks ergeben.

Dazu wird vorzugsweise ein Metallbalg zur Kompensation der Querschnittsfläche des Ventilsitzes der ersten Ventileinheit verwendet, der Druckschwankungen durch das Fluid oder den Ventilsitz der ersten Ventileinheit kompensiert.

Allgemein ist es bevorzugt, wenn die erste Ventileinheit einen in dem Austrittsraum angeordneten Schließkolben und einen mit dem Schließkolben zusammenwirkenden Ventilsitz umfasst, der den Eintrittsraum fluidisch mit dem Austrittsraum verbindet, wobei vorzugsweise ein längsverschieblich gelagertes Steuerrohr zum Öffnen der ersten Ventileinheit vorgesehen ist, das zwischen der zweiten Membran und der ersten Ventileinheit angeordnet ist, wobei ferner vorzugsweise die erste Ventileinheit eine Schließfeder umfasst, die den Schließkolben gegen den Ventilsitz drückt.

Bei diesen Maßnahmen ist von Vorteil, dass die erste Ventileinheit durch den Ausgangsdruck in Schließrichtung leicht vorbelastet wird, wobei die Schließfeder, die auf dieselbe Weise auf den Schließkolben wirkt wie der Ausgangsdruck, eine mechanisch präzise Regelung auch bei sehr geringen Drücken ermöglicht.

Weiter ist es bevorzugt, wenn das Steuerrohr eine permanente fluidische Verbindung zwischen dem Austrittsraum und einem an die zweite Membran angrenzenden Koppelraum herstellt.

Bei dieser Maßnahme ist von Vorteil, dass auf die zweite Membran großflächig der Ausgangsdruck wirkt, dass also der Ausgangsdruck nicht lediglich über das Steuerrohr zentrisch auf die zweite Membran geführt wird.

Diese Maßnahme ermöglicht eine reibungsarme und mechanisch sehr präzise Regelung.

Insbesondere, wenn der Vorsteuerdruck in einem Vorsteuervolumen bereitgestellt wird, das flächig auf die erste Membran wirkt, ermöglicht der so gebildete Doppelmembran-Druckregler durch seine großen druckbeaufschlagten Flächen eine präzise mechanische Druckregelung.

Weiter ist es bevorzugt, wenn der Schließkolben an dem Steuerrohr angeordnet ist, vorzugsweise das Steuerrohr - vorzugsweise über ein oberes Gleitlager - in einem Halteteil und - ebenfalls vorzugsweise über ein unteres Gleitlager - in einem Führungsstück gelagert ist.

Hier ist der mechanisch einfache Aufbau von Vorteil, wobei insbesondere durch die Verwendung von Gleitlagern anstelle von O-Ring-Abdichtungen eine geringe mechanische Reibung in der Ventilmechanik erzeugt wird.

Weiter ist es bevorzugt, wenn zwischen der ersten und zweiten Membran ein mit einer Entlüftungsöffnung in Fluidverbindung stehender Zwischenraum vorgesehen ist.

Bei dieser Maßnahme ist von Vorteil, dass sich zwischen den beiden Membranen kein Überdruck oder Unterdruck aufbauen kann, weil der Zwischenraum zum Entlüften dient, was die Regelung beeinträchtigen oder zumindest verzögern würde.

Allgemein ist es bevorzugt, wenn die Vorrichtung eine zweite Ventileinheit zum Enftlüften des Austrittsraumes aufweist, wobei die zweite Ventileinheit vorzugsweise zwischen dem Koppelraum und einer Entlüftungsöffnung wirkt, wobei weiter vorzugsweise die zweite Ventileinheit einen zwischen der zweiten Membran und dem Steuerrohr angeordneten Entlüftungssitz aufweist, der den Zwischenraum fluidisch mit dem Koppelraum verbindet und mit einer Dichtfläche an dem Steuerrohr zusammenwirkt, wobei weiter vorzugsweise eine Entlüftungsfeder vorgesehen ist, die zwischen dem Entlüftungssitz und einem Halteteil für das Steuerrohr angeordnet ist.

Diese Maßnahme ermöglicht auf mechanisch einfache Weise ein Entlüften der Vorrichtung für den Fall, dass der Vorsteuerdruck verringert wird, um einen niedrigeren Ausgangsdruck bereitzustellen.

Die Entlüftungsfeder sorgt jedoch nicht nur für ein sicheres Entlüften, sie ermöglicht auch eine Kraftverschiebung, so dass mit Vorsteuerdrücken im Überdruckbereich auch Regelungen von Ausgangsdrücken im Unterdruckbereich möglich sind.

Allgemein ist es bevorzugt, wenn die Vorsteuereinheit zur Erzeugung des Vorsteuerdrucks zumindest zwei elektrisch gesteuerte Proportionalventile aufweist, wobei das erste Proportionalventil zur Erhöhung des Vorsteuerdrucks und das zweite Proportionalventil zur Verringerung des Vorsteuerdrucks vorgesehen ist, wobei vorzugsweise die Vorsteuereinheit zumindest ein weiteres, über eine Steuerspannung elektrisch gesteuertes Ventil aufweist, das bei Ausfall der Steuerspannung einen vorgegebenen Zustand der Vorrichtung bewirkt.

Die Verwendung von zwei Proportionalventilen erlaubt im Vergleich zu Schaltventilen eine besonders feinfühlige elektronische Regelung des Vorsteuerdruckes und führt zu einer erheblichen Geräuschminderung sowie zu einer Energieeinsparung, da die Proportionalventile nur partiell bestromt werden müssen.

Das dritte Ventil greift nur bei Spannungsunterbrechung der Versorgungsspannung oder bei Ausfall von Steuersignalen, allgemein also bei Ausfall von Steuerspannungen ein und sorgt für einen vorgegebenen Zustand, in der Regel einen entlüfteten, sicheren Ventilzustand, in dem der Ausgangsdruck bei 0 bar liegt.

Die Vorsteuerventile und das dritte Ventil können mit einer digitalen Elektronik angesteuert werden, die den Ausgangsdruck mithilfe von bis zu drei Drucksensoren regelt, die sowohl den Eingangsdruck als auch den Ausgangsdruck sowie den Vorsteuerdruck messen und zur Regelung heranziehen.

Die Sollwertvorgabe für die Regelelektronik kann über ein digitales Netzwerk mit entsprechenden Busanbindungen erfolgen.

Insgesamt ermöglicht die neue Vorrichtung eine hochgenaue und leistungsarme Druckregelung, was nicht nur wegen der großen, wirksamen Druckflächen der beiden Membranen gegeben ist, sondern auch wegen der reibungsarmen Anordnung der einzelnen Ventilteile.

Die zwei, ggf. drei beweglichen Elemente, also die beiden Membranen und ggf. der Metallbalg, dienen zur Abdichtung und zum Aufbau der Druckkraft, O-Ring-Abdichtungen sind bei den beweglichen Teilen nicht zwingend erforderlich.

Weitere Vorteile ergeben sich aus der Beschreibung und der beigefügten Zeichnung.

Es versteht sich, dass die vorstehend genannten und die nachstehend noch zu erläuternden Merkmale nicht nur in der jeweils angegebenen Kombination, sondem auch in anderen Kombinationen oder in Alleinstellung verwendbar sind, ohne den Rahmen der vorliegenden Erfindung zu verlassen.

Ausführungsbeispiele der Erfindung sind in der beigefügten Zeichnung dargestellt und werden in der nachfolgenden Beschreibung näher erläutert. Es zeigen:
- Fig. 1: eine schematische Vorderansicht der neuen Vorrichtung;
- Fig. 2: einen schematischen Längsschnitt durch die Vorrichtung aus Fig. 1;
- Fig. 3: eine vergrößerte Darstellung der Druckregeleinheit aus der Vorrichtung aus Fig. 2; und
- Fig. 4: eine Explosionsdarstellung der Vorrichtung gemäß Fig. 2.

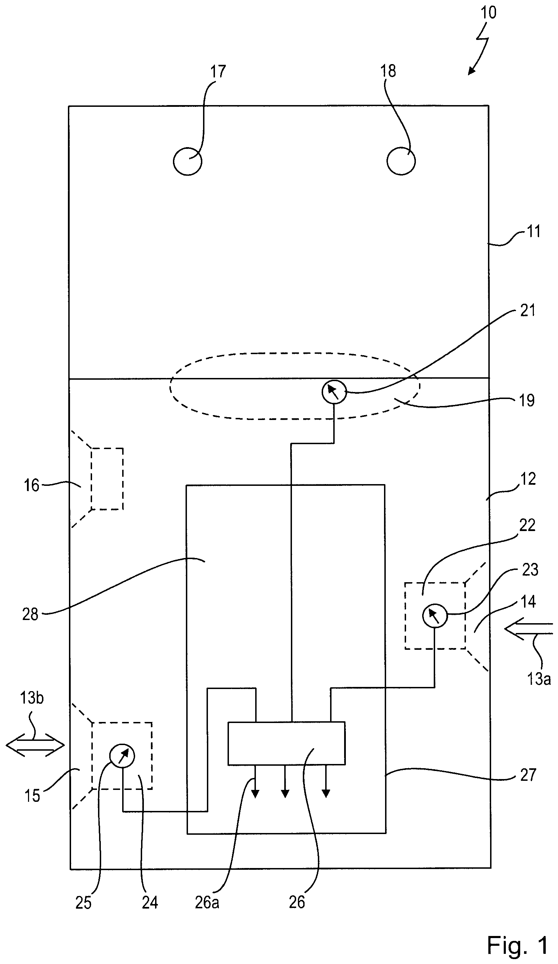

In Fig. 1 ist in einer schematischen Vorderansicht eine Vorrichtung 10 zur hochgenauen und leistungssparenden Druckregelung gezeigt, die eine Vorsteuereinheit 11 sowie eine Druckregeleinheit 12 aufweist. Vorsteuereinheit 11 und Druckregeleinheit 12 weisen jeweils ein Gehäuse auf, wobei die beiden Gehäuse auf nicht gezeigte Weise miteinander verbunden sind.

Die Vorrichtung 10 dient zur Druckregelung eines Fluids 13a mit einem Eingangsdruck, das an einer Eintrittsöffnung 14 in die Druckregeleinheit 12 eingeleitet wird und nach entsprechender Druckregelung als Fluid 13b mit einem Ausgangsdruck an einer Austrittsöffnung 15 ansteht.

Ferner ist eine Entlüftungsöffnung 16 vorgesehen, die beispielsweise beim Abschalten oder im Fehlerfall dazu dient, unter Druck in der Vorrichtung 10 befindliches Fluid abzublasen.

In der Vorsteuereinheit 11 sind ein Anschluss 17 als Vorsteuereinlass sowie ein Anschluss 18 als Vorsteuerauslass angedeutet. Über diese Anschlüsse 17, 18 wird ein Fluid in einem Vorsteuervolumen 19 an der Grenze zwischen der Vorsteuereinheit 11 und der Druckregeleinheit 12 mit einem Vorsteuerdruck 20 bereitgestellt, über den der Ausgangsdruck des Fluids 13b eingestellt wird.

Der Vorsteuerdruck 20 wird über einen Drucksensor 21 erfasst.

Die Eintrittsöffnung 14 führt in einen Eintrittsraum 22, in dem mit einem Drucksensor 23 der Druck des einströmenden Fluids 13a, also der Eingangsdruck und seine Schwankungen infolge der noch zu beschreibenden Regelung erfasst werden.

Die Austrittsöffnung 15 ist mit einem Austrittsraum 24 verbunden, in dem mit einem Drucksensor 25 der Ausgangsdruck des Fluids 13b erfasst wird.

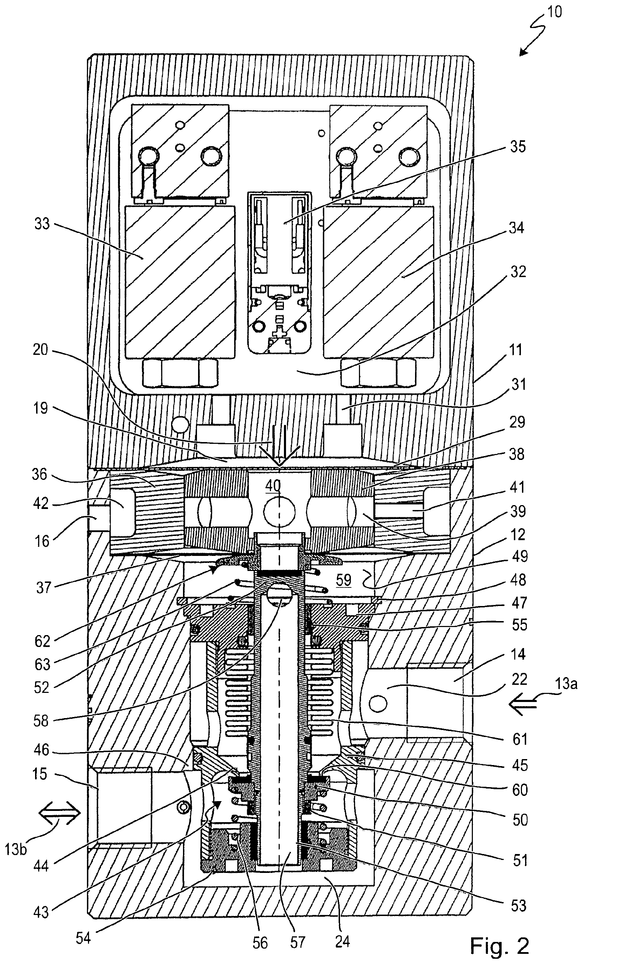

Die drei Drucksensoren 21, 23, 25 liefern ihre Drucksignale an eine Regeleinheit 26, die Steuerspannungen 26a ausgibt, die zu elektrisch gesteuerten Ventilen führen, die nachstehend anhand von Fig. 2 erörtert werden.

Die Regeleinheit 26 ist Teil einer Steuereinheit 27, die noch ein Grafik-Display 28 umfasst, auf dem Steuersignale, Fehlermeldungen etc. angegeben und ggf. Sollwerte eingegeben werden können.

In der Schnittdarstellung der Fig. 2 ist zu erkennen, dass der Vorsteuerdruck 20 in dem Vorsteuervolumen 19 auf eine obere Membran 29 einwirkt, deren wirksame Druckfläche 30 großflächig dem Vorsteuervolumen 19 gegenüberliegt.

An ihren Rändern ist die obere Membran 29 fest zwischen der Vorsteuereinheit 11 und der Druckregeleinheit 12 eingespannt.

Das Vorsteuervolumen 19 ist über Kanäle und Öffnungen 31 mit einem Innenraum 32 der Vorsteuereinheit 11 verbunden. In dem Innenraum 32 sind zwei Proportionalventile 33 und 34 sowie ein Sicherheitsventil 35 angeordnet.

Das Proportionalventil 33 ist ein 2/2 NC Belüftungsventil, das Proportionalventil 34 ein 2/2 NC Entlüftungsventil, das Sicherheitsventil 35 ein 2/2 NC oder 2/2 NO Schaltventil.

Über die Proportionalventile 33, 34 wird der Vorsteuerdruck 20 in dem Vorsteuervolumen 19 vergrößert oder verringert, je nachdem, welcher Ausgangsdruck bei welchem Eingangsdruck des Fluids 13 eingestellt werden soll.

Für den Fall, dass die Steuersignale 26a bzw. die Spannungsversorgung aufgrund eines technischen Fehlers ausfallen, schließen die beiden Proportionalventile 33 und 34, während das Sicherheitsventil 35 jetzt schaltet, so dass der Druck in dem Innenraum 32 und über die Kanäle 31 der Vorsteuerdruck 20 in dem Vorsteuervolumen 19 verändert werden kann.

Die obere Membran 29 deckt einen zylindrischen Raum in der Druckregeleinheit 12 ab, in dem sich ein zylindrisches Druckstück 36 befindet, das eine untere Membran 37 auf eine Schulter in der Druckregeleinheit 12 aufdrückt.

Wenn die Vorsteuereinheit 11 und die Druckregeleinheit 12 fest miteinander verbunden sind, drückt somit das Druckstück 36 die obere Membran 29 gegen eine Ringfläche an der Vorsteuereinheit 11 und gleichzeitig die untere Membran 37 gegen eine Ringschulter im Inneren der Druckregeleinheit 12.

Zwischen den beiden Membranen 29, 37 ist ein mechanischer Bewegungskoppler 38 angeordnet, der die Bewegung der beiden Membranen mechanisch miteinander koppelt.

In dem Bewegungskoppler 38 sind Entlüftungskanäle 39 vorgesehen, die mit Entlüftungskanälen 41 sowie einem Ringkanal 42 an dem Druckstück 36 in Fluidverbindung stehen, so dass ein Zwischenraum 40 zwischen den beiden Membranen 29 und 37 über die Entlüftungsöffnung 16 entlüftet oder mit Unterdruck verbunden wird.

In Fig. 2 unten ist in einem Sackloch in der Druckregeleinheit 12 eine erste Ventilanordnung 43 vorgesehen, über die der Eintrittsraum 22 und der Austrittsraum 24 wahlweise miteinander in Fluidverbindung gebracht werden können, wobei der Öffnungsgrad der Ventilanordnung 43 proportional verändert werden kann.

Die Ventilanordnung 43 umfasst einen Ventilsitz 44, der innen in einer Hülse 45 ausgebildet ist, die sich zwischen einer Ringschulter 46 in der Druckregeleinheit 12 und einem in Fig. 2 oberhalb angeordneten Halteteil 47 abstützt, das durch einen Haltering 48 in einer gestuften Bohrung 49 gehalten ist, die sich als Sackloch durch die Druckregeleinheit 12 erstreckt.

Die erste Ventilanordnung 43 umfasst ferner einen Schließkolben 50, der in dem Austrittsraum 24 angeordnet ist und über eine Schraubenmutter 51 auf einem längsverschieblichen Steuerrohr 52 befestigt ist.

Das Steuerrohr 52 ist in einem Gleitlager 53 in einem unteren, unterhalb des Schließkolben 50 liegenden Führungsstück 54 sowie einem oberen Gleitlager 55 in dem Halteteil 47 gelagert, so dass es einen reibungsarmen Hub ausführen kann.

Zwischen dem Führungsstück 54 und dem Schließkolben 50 ist eine Schließfeder 56 angeordnet, die den Schließkolben 50 gegen den Ventilsitz 44 drückt.

In dem Steuerrohr 52 ist ein zu dem Austrittsraum 24 offenes, zentrisches Sackloch 57 vorgesehen, das oben in Querlöchern 58 mündet, die in einen Koppelraum 59 führen, der sich an die untere Membran 37 anlegt und dort ihre gesamte wirksame Druckfläche 37a mit unter Ausgangsdruck stehendem Fluid 13b beaufschlagt.

Es sei noch erwähnt, dass zwischen dem Ventilsitz 44 und dem Schließkolben 50 eine Dichtfläche 60 vorgesehen ist, die für ein sicheres Schließen der ersten Ventilanordnung 43 sorgt.

In dem Eintrittsraum 22 ist zwischen dem Führungsstück 54 und dem Halteteil 47 ein Metallbalg 61 vorgesehen, dessen Differenzfläche so wirkt, dass bei schwankendem Eingangsdruck des Fluids 13a und/oder bei variierendem Öffnungsgrad der ersten Ventileinheit 43 in dem Eintrittsraum 22 entstehende Druckschwankungen kompensiert werden können.

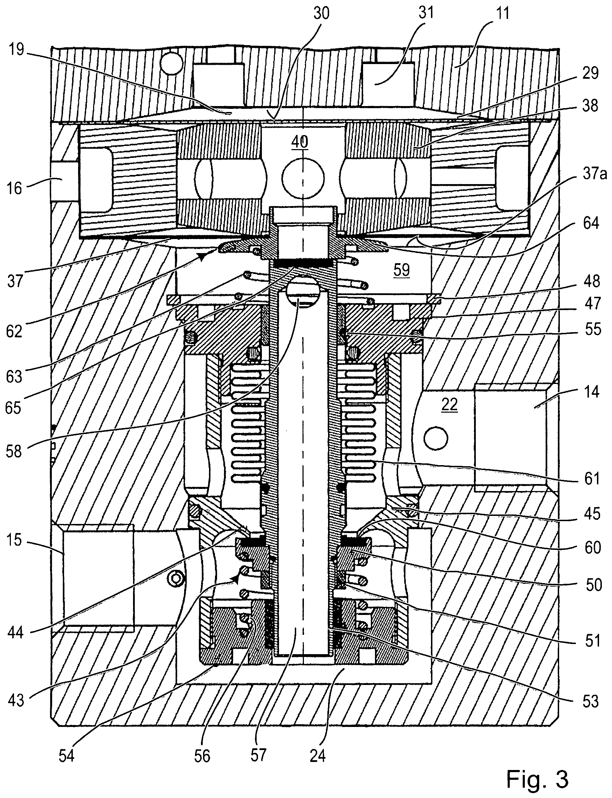

Zwischen dem Zwischenraum 40 und dem Koppelraum 59 ist eine zweite Ventilanordnung 62 angeordnet, die durch eine Entlüftungsfeder 63 in Öffnungsrichtung beaufschlagt ist, wie dies jetzt anhand der Fig. 3 weiter erörtert wird.

Die zweite Ventilanordnung 62 umfasst als Entlüftungssitz 64 ein scheibenförmiges Teil mit Zapfen und Durchlassbohrung, wobei die Durchlassbohrung durch eine Dichtfläche 65 an der Stirnseite des Steuerrohrs 53 verschlossen ist, wenn die erste Ventileinheit 43 zumindest teilweise geöffnet ist.

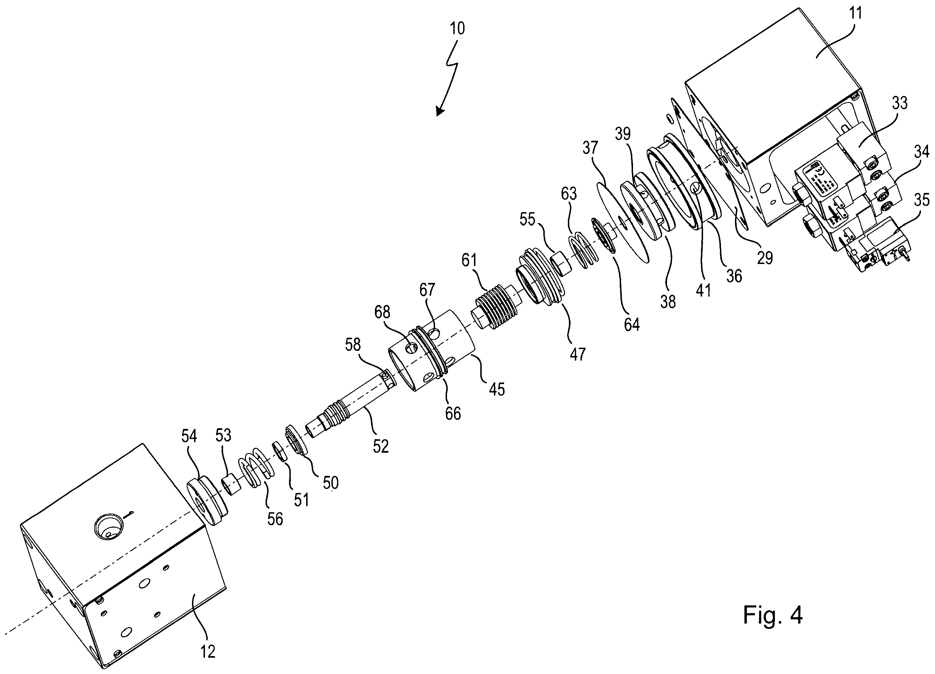

In Fig. 4 ist die Vorrichtung 10 aus Fig. 2 in schematischer, seitlicher Explosionsdarstellung gezeigt, wobei hier insbesondere zu erkennen ist, dass die Hülse 45 zwei Ringhülsen 66 aufweist, die sich an der Ringschulter 46 in der gestuften Bohrung 49 abstützen.

Ferner ist zu erkennen, dass die Hülse 45 obere Queröffnungen 67 aufweist, die in dem Eintrittsraum 22 liegen, und untere Queröffnungen 68 aufweist, die in dem Austrittsraum 24 liegen.

Wenn die Vorrichtung 10 derart angesteuert wird, dass zum einen ein einen Eingangsdruck aufweisendes Fluid 13a in den Eintrittsraum 22 geleitet wird und zum anderen in dem Vorsteuervolumen 19 ein Vorsteuerdruck 20 aufgebaut wird, so drückt die obere Membran 29 über den Bewegungskoppler 38 auf die untere Membran 37 sowie den Ventilsitz 64, der wiederum das Steuerrohr 52 in Fig. 2 nach unten bewegt, so dass gegen die Kraft der Schließfeder 56 der Schließkolben 50 von dem Ventilsitz 44 freikommt und somit eine Fluidverbindung zwischen dem Eintrittsraum 22 und dem Austrittsraum 24 herstellt.

Das sich in dem Austrittsraum 24 ansammelnde Fluid 13b gelangt durch das Sackloch 57 und die Querlöcher 58 in den Koppelraum 59, wo es die wirksame Druckfläche 37a der unteren Membran 37 beaufschlagt.

Auf diese Weise kann feinfühlig über den Vorsteuerdruck 20 geregelt in dem Austrittsraum ein unter einem einstellbaren Ausgangsdruck stehendes Fluid 13b bereitgestellt werden.

Druckschwankungen in dem zugeführten Fluid 13a oder Änderungen im Öffnungsgrad der ersten Ventileinheit 43 führen zu Druckschwankungen in dem Eintrittsraum 22, die jedoch durch die Differenzfläche des Metallbalges 61 größtenteils kompensiert werden, so dass ein Nachsteuern über den Vorsteuerdruck 20 nur bei größeren Druckabweichungen erforderlich ist.

Mit anderen Worten, die Proportionalventile 33 und 34 sind in der Regel nicht bestromt, sie werden gemäß ihrer Steuerkurve nur dann bestromt, wenn der Vorsteuerdruck 20 in dem Vorsteuervolumen 19 erhöht oder verringert werden soll.

Bei sehr geringen Ausgangsdrücken, die sogar im Unterdruckbereich liegen können, kann dennoch mit einem Vorsteuerdruck 20 gearbeitet werden, der im Überdruckbereich liegt, weil die beiden Federn 56 und 62 für eine entsprechende Gegenkraft sorgen, die im Falle eines Unterdruckes bei dem Fluid 13a, 13b nicht durch das Fluid selbst auf die wirksame Druckfläche 37a aufgebracht werden kann.

Für den Fall, dass die Regeleinheit 26 bzw. die Spannungsversorgung ausfällt, also keine Steuersignale 26a mehr geliefert werden können, schließen die beiden Proportionalventile 33 und 34, da sie im Ruhezustand geschlossen sind (NC = Normally Closed).

Gleichzeitig schaltet aber das Ventil 35, das beispielsweise im Ruhezustand offen ist (NO = Normally Open), so dass nicht nur der Innenraum 32 und das Vorsteuervolumen 19, sondern auch der Koppelraum 59 und der Austrittraum 24 bei einem Stromausfall oder sonstigen mechanischen Fehlern unverzüglich entlüftet werden.

Durch das Entlüften des Innenraumes 32 wird zunächst auch das Vorsteuervolumen 19 entlüftet, so dass der Vorsteuerdruck 20 wegfällt und die Schließfeder 46 das Steuerrohr 52 so weit nach oben drückt, bis die erste Ventileinheit 43 geschlossen ist und die zweite Ventileinheit 62 öffnet.

Die Entlüftungsfeder 63 drückt jetzt den Entlüftungssitz 64 - und damit den Bewegungskoppler 38 sowie die obere Membran 29 - weiter nach oben, so dass der Entlüftungssitz von der Dichtfläche 65 freikommt.

Auf diese Weise entsteht eine fluidische Verbindung zwischen dem Zwischenraum 40 und dem Koppelraum 59, der in beschriebener Weise auch mit dem Austrittsraum 24 verbunden ist. Über das Sackloch 57 gelangt so auch der Austrittraum 24 in fluidische Verbindung mit dem Zwischenraum 40..

Weil der Zwischenraum 40 in Fluidverbindung mit der Entlüftungsöffnung 16 steht, führt dieser Vorgang also zu einem vollständigen Entlüften der Druckregeleinheit 12.

Bei einem Spannungsabfall oder sonstigem technischen Fehler gehen also sowohl die Vorsteuereinheit 11 als auch die Druckregeleinheit 12 in einen vorgegebenen, sicheren Zustand.

Das Vorrichtung 10 wirkt somit wie ein 3/3 NC Druckregelventil mit einer ausgeregelten Stellung, in der beide Ventileinheiten 43, 62 geschlossen sind.

Wird der Sollwert erhöht, so wird das Proportionalventil 33 betätigt und der Vorsteuerdruck 20 erhöht, wodurch dann die erste Ventileinheit 43 betätigt wird und der Ausgangsdruck sich erhöht. Hat der Ausgangsdruck den Vorsteuerdruck erreicht, schließt die Ventileinheit 43 wieder.

Wenn der Sollwert erniedrigt wird, wird das Proportionalventil 34 betätigt und der Vorsteuerdruck 20 verringert, wodurch dann die zweite Ventileinheit 62 betätigt wird und der Ausgangsdruck sich verringert. Hat der Ausgangsdruck den Vorsteuerdruck erreicht, schließt die Ventileinheit 62 wieder.

## Patentansprüche

1. Vorrichtung zur Bereitstellung eines Fluids (13b) mit geregeltem Ausgangsdruck, die eine über einen Vorsteuerdruck (20) gesteuerte Druckregeleinheit (12) aufweist, an der ein Eintrittsraum (22) für das unter einem Eingangsdruck stehende Fluid (13a), ein Austrittsraum (24) für das den geregelten Ausgangsdruck aufweisende Fluid (13b) sowie eine erste, zwischen dem Eintrittsraum (22) und dem Austrittsraum (24) wirkende Ventileinheit (43) vorgesehen ist, und eine Vorsteuereinheit (11) umfasst, die den Vorsteuerdruck (20) bereitstellt, wobei die Druckregeleinheit (12) eine erste Membran (29), auf die der Vorsteuerdruck (20) einwirkt, und eine mechanisch mit der ersten Membran (29) gekoppelte zweite Membran (37) aufweist, auf die das den Ausgangsdruck aufweisende Fluid (13b) einwirkt, wobei zumindest die zweite Membran (37) mechanisch auf die erste Ventileinheit (43) einwirkt,
**dadurch gekennzeichnet, dass** in dem Eintrittsraum (22) zumindest ein Ausgleichselement (61) mit druckabhängiger Kompensationskraft angeordnet ist.

2. Vorrichtung nach Anspruch 1, **dadurch gekennzeichnet, dass** die erste und die zweite Membran (29, 37) jeweils eine wirksame Druckfläche (30, 37a) aufweisen, wobei die Druckfläche (30) zumindest gleich groß oder größer ist als die Druckfläche (37a).

3. Vorrichtung nach Anspruch 1 oder 2, **dadurch gekennzeichnet, dass** die erste Ventileinheit (43) einen in dem Austrittsraum (24) angeordneten Schließkolben (50) und einen mit dem Schließkolben (50) zusammenwirkenden Ventilsitz (44) umfasst, der den Eintrittsraum (22) fluidisch mit dem Austrittsraum (24) verbindet.

4. Vorrichtung nach Anspruch 3, **dadurch gekennzeichnet, dass** sie ein längsverschieblich gelagertes Steuerrohr (52) zum Öffnen der ersten Ventileinheit (43) umfasst, das zwischen der zweiten Membran (37) und der ersten Ventileinheit (43) angeordnet ist.

5. Vorrichtung nach Anspruch 3 oder 4, **dadurch gekennzeichnet, dass** die erste Ventileinheit (43) eine Schließfeder (56) umfasst, die den Schließkolben (50) gegen den Ventilsitz (44) drückt.

6. Vorrichtung nach Anspruch 4 oder 5, **dadurch gekennzeichnet, dass** das Steuerrohr (52) eine permanente fluidische Verbindung zwischen dem Austrittsraum (24) und einem an die zweite Membran (37) angrenzenden Koppelraum (59) herstellt.

7. Vorrichtung nach einem der Ansprüche 4 bis 6, **dadurch gekennzeichnet, dass** der Schließkolben (50) an dem Steuerrohr (52) angeordnet ist.

8. Vorrichtung nach einem der Ansprüche 4 bis 7, **dadurch gekennzeichnet, dass** das Steuerrohr (52) vorzugsweise über ein oberes Gleitlager (55) in einem Halteteil (47) und vorzugsweise über ein unteres Gleitlager (53) in einem Führungsstück (54) gelagert ist.

9. Vorrichtung nach einem der Ansprüche 1 bis 8, **dadurch gekennzeichnet, dass** zwischen der ersten und zweiten Membran (39, 37) ein mit einer Entlüftungsöffnung (16) in Fluidverbindung stehender Zwischenraum (40) vorgesehen ist.

10. Vorrichtung nach einem der Ansprüche 1 bis 9, **dadurch gekennzeichnet, dass** sie eine zweite Ventileinheit (62) zur Entlüftung des Austrittsraumes (24) aufweist.

11. Vorrichtung nach Anspruch 6 und 10, **dadurch gekennzeichnet, dass** die zweite Ventileinheit (62) zwischen dem Koppelraum (59) und einer Entlüftungsöffnung (16) wirkt.

12. Vorrichtung nach Anspruch 9 und 11, **dadurch gekennzeichnet, dass** die zweite Ventileinheit (62) einen zwischen der zweiten Membran (37) und dem Steuerrohr (52) angeordneten Entlüftungssitz (64) aufweist, der den Zwischenraum (40) fluidisch mit dem Koppelraum (59) verbindet und mit einer Dichtfläche an dem Steuerrohr (52) zusammenwirkt.

13. Vorrichtung nach Anspruch 12, **dadurch gekennzeichnet, dass** die zweite Ventileinheit (62) eine Entlüftungsfeder (63) aufweist, die zwischen dem Entlüftungssitz (64) und einem Halteteil (47) für das Steuerrohr (52) angeordnet ist.

14. Vorrichtung nach einem der Ansprüche 1 bis 13, **dadurch gekennzeichnet, dass** die Vorsteuereinheit (11) zur Erzeugung des Vorsteuerdrucks (20) zumindest zwei elektrisch gesteuerte Proportionalventile (33, 34) aufweist, wobei ein erstes Proportionalventil (33) zur Erhöhung des Vorsteuerdrucks (20) und ein zweites Proportionalventil (34) zur Verringerung des Vorsteuerdrucks (20) vorgesehen ist.

15. Vorrichtung nach einem der Ansprüche 1 bis 14, **dadurch gekennzeichnet, dass** die Vorsteuereinheit (11) zumindest ein über eine Steuerspannung (26a) elektrisch gesteuertes Ventil (35) aufweist, das bei Ausfall der Steuerspannung (26a) einen vorgegebenen Zustand der Vorrichtung (10) bewirkt.

## Claims

1. Device for providing a fluid (13b) at a regulated outlet pressure, comprising a pressure regulating unit (12) controlled by a pilot pressure (20), which is provided with an inlet chamber (22) for the fluid (13a) having an inlet pressure, an outlet chamber (24) for the fluid (13b) having the controlled outlet pressure, and a first valve unit (43) acting between the inlet chamber (22) and the outlet chamber (24), and a pilot control unit (11) providing the pilot pressure (20), wherein the pressure regulating unit (12) comprises a first diaphragm (29) on which the pilot pressure (20) acts, and a second diaphragm (37) mechanically coupled to the first diaphragm (29), on which the fluid (13b) having the outlet pressure acts, wherein at least the second diaphragm (37) acts mechanically on the first valve unit (43),
**characterized in that** in the inlet chamber (22) there is arranged at least one compensating element (61) having a pressure-dependent compensation force.

2. Device according to claim 1, **characterized in that** the first and second diaphragms (29, 37) are each provided with an effective pressure surface (30, 37a), wherein the pressure surface (30) is at least equal to or larger than the pressure surface (37a).

3. Device according to claim 1 or 2, **characterized in that** the first valve unit (43) comprises a closing piston (50) arranged in the outlet chamber (24) and a valve seat (44) cooperating with the closing piston (50), wherein the valve seat (44) connects the inlet chamber (22) fluidically with the outlet chamber (24).

4. The device according to claim 3, **characterized by** comprising a longitudinally slidably mounted control tube (52) for opening the first valve unit (43), which is arranged between the second diaphragm (37) and the first valve unit (43).

5. Device according to claim 3 or 4, **characterized in that** the first valve unit (43) comprises a closing spring (56) which presses the closing piston (50) against the valve seat (44).

6. Device according to claim 4 or 5, **characterized in that** the control tube (52) establishes a permanent fluidic connection between the outlet chamber (24) and a coupling chamber (59) adjacent to the second diaphragm (37).

7. Device according to one of claims 4 to 6, **characterized in that** the closing piston (50) is arranged on the control tube (52).

8. Device according to one of claims 4 to 7, **characterized in that** the control tube (52) is mounted preferably via an upper slide bearing (55) in a retaining part (47) and preferably via a lower slide bearing (53) in a guide piece (54).

9. Device according to one of claims 1 to 8, **characterized in that** an intermediate chamber (40) being in fluid communication with a vent opening (16) is provided between the first and second diaphragms (39, 37).

10. Device according to one of claims 1 to 9, **characterized in that** it comprises a second valve unit (62) for venting the outlet chamber (24).

11. Device according to claims 6 and 10, **characterized in that** the second valve unit (62) acts between the coupling chamber (59) and a vent opening (16).

12. Device according to claims 9 and 11, **characterized in that** the second valve unit (62) comprises a venting seat (64) arranged between the second diaphragm (37) and the control tube (52), wherein the venting seat (64) fluidically connects the intermediate chamber (40) to the coupling chamber (59) and cooperates with a sealing surface on the control tube (52).

13. Device according to claim 12, **characterized in that** the second valve unit (62) comprises a venting spring (63) that is disposed between the venting seat (64) and a retaining part (47) for the control tube (52).

14. Device according to one of claims 1 to 13, **characterized in that** the pilot control unit (11) comprises at least two electrically controlled proportional valves (33, 34) for generating the pilot control pressure (20), wherein a first proportional valve (33) is provided for increasing the pilot control pressure (20) and a second proportional valve (34) for reducing the pilot control pressure (20).

15. Device according to one of claims 1 to 14, **characterized in that** the pilot control unit (11) comprises at least one valve (35) which is electrically controlled via a control voltage (26a) and which effects a predetermined state of the device (10) in the event of failure of the control voltage (26a).

## Revendications

1. Dispositif destiné à fournir un fluide (13b) avec une pression de sortie régulée, comportant une unité régulatrice de pression (12) commandée par une pression pilote (20), sur laquelle sont prévus un espace d'entrée (22) pour le fluide (13a) soumis à une pression d'entrée, un espace de sortie (24) pour le fluide (13b) possédant la pression de sortie régulée, ainsi qu'une première unité de valve (43) opérant entre l'espace d'entrée (22) et l'espace de sortie (24), et possédant une unité de pilotage (11), laquelle fournit la pression pilote (20), dans lequel l'unité régulatrice de pression (12) comporte une première membrane (29) sur laquelle s'exerce la pression pilote (20) et une deuxième membrane (37) couplée mécaniquement avec la première membrane (29), sur laquelle agit le fluide (13b) possédant la pression de sortie, dans lequel au moins la deuxième membrane (37) agit mécaniquement sur la première unité de valve (43),
**caractérisé en ce qu'**au moins un élément de compensation (61) doté d'une force de compensation dépendant de la pression est agencé dans l'espace d'entrée (22).

2. Dispositif selon la revendication 1, **caractérisé en ce que** la première et la deuxième membrane (29, 37) comportent chacune une surface de pression efficace (30, 37a), dans lequel la surface de pression (30) est au moins aussi grande ou plus grande que la surface de pression (37a).

3. Dispositif selon la revendication 1 ou 2, **caractérisé en ce que** la première unité de valve (43) comprend un piston de verrouillage (50) agencé dans l'espace de sortie (24) et un siège de valve (44) coopérant avec le piston de verrouillage (50) et créant une connexion fluide entre l'espace d'entrée (22) et l'espace de sortie (24).

4. Dispositif selon la revendication 3, **caractérisé en ce qu'**il comprend un tube de commande (52) disposé pour être déplacé longitudinalement, destiné à l'ouverture de la première unité de valve (43) et agencé entre la deuxième membrane (37) et la première unité de valve (43).

5. Dispositif selon la revendication 3 ou 4, **caractérisé en ce que** la première unité de valve (43) comprend un ressort de verrouillage (56), lequel presse le piston de verrouillage (50) contre le siège de valve (44).

6. Dispositif selon la revendication 4 ou 5, **caractérisé en ce que** le tube de commande (52) crée une connexion de fluide permanente entre l'espace de sortie (24) et un espace de couplage (59) délimité par la deuxième membrane (37).

7. Dispositif selon l'une des revendications 4 à 6, **caractérisé en ce que** le piston de verrouillage (50) est agencé sur le tube de commande (52).

8. Dispositif selon l'une des revendications 4 à 7, **caractérisé en ce que** le tube de commande (52) est disposé de préférence au moyen d'un roulement supérieur (55) dans une pièce de maintien (47) et de préférence au moyen d'un roulement inférieur (53) dans un élément de guidage (54).

9. Dispositif selon l'une des revendications 1 à 8, **caractérisé en ce qu'**un espace intermédiaire (40) en connexion fluide avec une ouverture de ventilation (16) est prévu entre la première et la deuxième membrane (39, 37).

10. Dispositif selon l'une des revendications 1 à 9, **caractérisé en ce qu'**il comporte une deuxième ouverture de valve (62) destinée à la ventilation de l'espace de sortie (24).

11. Dispositif selon les revendications 6 et 10, **caractérisé en ce que** la deuxième ouverture de valve (62) opère entre l'espace de couplage (59) et l'ouverture de ventilation (16).

12. Dispositif selon les revendications 9 et 11, **caractérisé en ce que** la deuxième ouverture de valve (62) comporte un siège de ventilation (64) agencé entre la deuxième membrane (37) et le tube de commande (52), connectant avec le fluide l'espace intermédiaire (40) et l'espace de couplage (59) et coopérant avec une surface étanche sur le tube de commande (52).

13. Dispositif selon la revendication 12, **caractérisé en ce que** la deuxième unité de valve (62) comporte un ressort de ventilation (63), agencé entre le siège de ventilation (64) et une pièce de maintien (47) pour le tube de commande (52).

14. Dispositif selon l'une des revendications 1 à 13, **caractérisé en ce que** l'unité de pilotage (11) comporte au moins deux valves proportionnelles (33, 34) commandées électriquement pour produire la pression pilote (20), dans lequel une première valve proportionnelle (33) est prévue pour augmenter la pression pilote (20) et une deuxième valve proportionnelle (34) est prévue pour réduire la pression pilote (20).

15. Dispositif selon l'une des revendications 1 à 14, **caractérisé en ce que** l'unité de pilotage (11) comporte au moins une valve (35) commandée électriquement au moyen d'une tension pilote (26a), réalisant un état prédéfini du dispositif (10) en cas de défaillance de la tension pilote (26a).
